# EUROPEAN PATENT APPLICATION

(11) **EP 4 105 740 A1**
(43) Date of publication of application: **21.12.2022**
(21) Application number: 21179326.0
(22) Date of filing: 14.06.2021
(51) Int. Cl.: G05B 17/02

(54) **METHOD FOR FORMULATION AND MODELLING OF INTENTIONS IN PROCESS PLANT ENGINEERING**

(71) Applicant: ABB Schweiz AG, 5400 Baden (CH)
(72) Inventor: MARKAJ, Artan, 22087 Hamburg (DE); HOERNICKE, Mario, 76829 Landau (DE); STARK, Katharina, 69469 Weinheim (DE); FAY, Alexander, 22149 Hamburg (DE)
(74) Representative: Maiwald GmbH

(57) **Abstract**

The invention relates to a method for formulation and modelling of intentions in process plant engineering, comprising the steps:
formulating (S10), by an assistance system (100), intentions of an actor (A1, A2) by guiding the actor (A1, A2) to provide the intentions (I) to the assistance system (100) in a controlled natural language using semi-formal phrases (P), wherein the intentions (I) are hierarchically structured and comprises at least a goal (IG), describing a goal to be achieved, at least an implementation (II), describing how the goal can be achieved, and at least an requirement (IR), describing requirements for the at least one implementation (II);
translating (S20), by the assistance system (100), the intentions (I) into an intention model (MI) wherein the intention model (MI) describes a relationship between the intentions (I);
transforming (S30), by the assistance system (100), the intention model (MI) into a graphical representation (RG) of the intention model (MI) and providing the graphical representation (RG) to the actor (A1, A2);
modeling (S40), by the assistance system (100), the intention model (MI) using modelling data (DM) provided by the actor (A1, A2), wherein the graphical representation (RG) allows the actor (A1, A2) to provide the modelling data (DM) to the assistance system (100).

## Description

### FIELD OF THE INVENTION

The invention relates to the field of process plant engineering.

### BACKGROUND OF THE INVENTION

The early phases of process engineering are characterized by many decisions, such as the selection of the appropriate unit operations, adequate machines and apparatuses as well as the determination of abstract process control sequences. The decisions are often based on different requirements and criteria, such as costs or compatibility with the product. The decisions must be transparent and describable in relation to the underlying motivation, goals and intentions. Other disciplines, such as automation engineering, continue to work with the requirements and results from the early phases. Goals represent objectives, which should be achieved by system objects through various actions. Intentions narrow the abstract goals by additionally containing constraints, possible solutions and context.

The solutions must be presented in a documentable way, in order to understand the decision-making process. Current means of description, such as flowsheets or textual description, are rigid and often focus and provide the solution (the "how"), at best in a semi-formal representation, and not the underlying goals and intentions (the "what" and "why"). In these means of description not all solutions are presented, as well as not all requirements are shown in a formal and structured way through the different (sub-) phases of process engineering. Conflicts between various stakeholder intentions are understood too late.

The decision to make changes (e.g. swap or add equipment, technologies or process steps) in the ongoing engineering process is accompanied by a simultaneous (often by hand) check of whether the new decisions fulfil the requirements or contradict them. Various decisions are taken by different people, making it difficult to review requirements and objectives across all these levels. Furthermore, some of the objectives are correlated and are causally related, but decisions taken later in the engineering workflow do not consider these causal dependencies. The solution validation and quality checking are often made by hand, by checking the informal requirements and comparing them to the solution provided.

### DESCRIPTION OF THE INVENTION

It is therefore an objective of the invention to provide a method that allows discipline-independent formulation and modelling of intentions in process plant engineering. This objective is achieved by the subject-matter of the independent claims. Further preferred embodiments are evident from the dependent patent claims.

According an aspect of the invention, a method for formulation and modelling of intentions in process plant engineering comprises the following steps. Formulate, by an assistance system, intentions of an actor by guiding the actor to provide the intentions to the assistance system in a controlled natural language using semi-formal phrases, wherein the intentions are hierarchically structured and comprises at least a goal, describing a goal to be achieved, at least an implementation, describing how the goal can be achieved and at least a requirement, describing requirements for the at least one implementation. Translating, by the assistance system, the intentions into an intention model wherein the intention model describes a relationship between the intentions. Transforming, by the assistance system, the intention model into a graphical representation of the intention model and providing the graphical representation to the actor. Modeling, by the assistance system, the intention model using modelling data provided by the actor, wherein the graphical representation allows the actor to provide the modelling data to the assistance system.

The term "goal", as used herein, comprises an objective that should be achieved by a production process of the process plant.

The term "implementation", as used herein, describes how the goal can be achieved if a certain situation occurs.

The semi-formal phrases preferably comprise clozes that have been completed by the actor. Furthermore, the phrases comprise questions to the actor that are answered by the actor either by selecting a predetermined answer or filling out a free text field.

In other words, the semi-formal phrases are transformed in to a graphical means of description for intention modelling.

The intention model preferably comprises a plurality of elements like goals, implementations and requirements of the production plant and process steps carried out by the object. Furthermore dependencies between the elements are modelled inside the intention model. In addition, the engineer is required to apply the modelling rules of the underlying meta model, so that the modelling of implementations cannot be done without assignment to goals, and likewise the modelling of requirements without assignment to implementations.

Preferably, the actor is a process engineer or an automation engineer.

Preferably, modelling the intention model comprises extended, by the actor, or in particular a plurality of actors of different disciplines, the intention model with various elements, such as tasks, satisfaction levels, link compositions and contribution types.

Guiding the actor in providing the intentions, the assistance system is provided with all necessary information to determine an intention model that can be efficiently modelled by one or more actors.

Preferably, the modelling of the intention model is a continuous process of a plurality of actors, which provide input to the intention model over a plurality of iteration steps. In other words, the intention model allows different actors with different disciplines, or in other words technical background, to exchange their intentions and knowledge in a formalized way that can be easily understood by the other actors.

Preferably, the actor that provides the initial intentions is a process engineer. The actor that models the intention model afterwards is at least a process engineer and/or an automation engineer.

Preferably, the intention model shows interactions between different intentions of various actors, or other words stakeholders. Further, the intention model allows identifying engineering conflicts and measuring requirements completeness.

Preferably, the intentions of the different actors comprise a reasoning of the different intentions. Thus, the other actors, in particular of different disciplines, are able to understand the intentions of the actor.

The intention model is preferably used during early phases of engineering, in particular front-end engineering design, FEED.

Preferably, the method is a computer-implemented method.

Thus, the method allows to provide an intention model that combined the knowledge and intentions of a plurality of actors of different disciplines.

Thus, the method rather focusses on intentions than on solutions and therefore defining continuous requirements and documenting decisions in a graphical way for each actor.

In a preferred embodiment, modelling the intention model comprises adjusting and/or extending the intentions of the intention model.

In other words, the intentions are specified with dependencies and causal relations between the intentions.

In a preferred embodiment, the actor is guided to provide the intention that each implementation is assigned to at least one goal and that each requirement is assigned to at least one implementation.

In other words, requirements cannot be directly assigned to a goal, but indirectly over an implementation.

In other words, goals can be assigned to other goals, in particular so a goal-subgoal hierarchy can be build. Or in other words goals can be decomposed into subgoals.

Alternatively, the assistance system is configured to automatically assign the different intentions to each other, in particular using knowledge of a knowledge database that comprises knowledge about former intention models.

In a preferred embodiment, the intention model comprises a plurality of abstraction layers, wherein the intentions are assigned to the abstraction layers; wherein at least one goal is assigned to each abstraction layer.

Preferably, each goal is derivable from an implementation of a higher abstraction layer.

Preferably, each implementation is assigned to at least one goal.

Preferably, an implementation is assigned to a goal at a different abstraction layer.

Preferably, the implementations are assigned to other implementations.

Preferably, there is at least one actor per abstraction layer and all actors that work in the same abstraction layer work in the same, or further preferably to a large extend in the same, discipline.

Preferably, the intention model connects intentions through all of the abstraction layers. Thus, the intention model represents one continuous model for all actors.

Within the actor boundary, all intentions of the respective actor, or in other words all elements that are performed by the respective actor, are located according to the requirements of the previous abstraction layer. The actor thus formulates his requirements outside of the actor boundary, wherein the requirements are then handled by the subsequent abstraction layers.

In other words, the requirements from one abstraction layer build the basis for the following abstraction layer. The requirement from the higher abstraction layer is preferably used as a goal for the next abstraction layer. Further preferably, a requirement is part of a goal in another intention model.

Due to the structure of the intention model, large intentions can be incrementally analyzed by the assistance system or the respective actor.

In a preferred embodiment, the intention model applies an ontology-based representation of the concepts and their relations of the semi-formal phrases. In other words, the ontology defines concepts of the semi-formal phrases. In particular keywords, free text field, and their relations. Using reasoning on the ontology, new knowledge can be inferred.

In a preferred embodiment, formulating the intention comprises inferring, by a reasoning engine of the assistance system, the semi-formal phrases using a knowledge database of the assistance system.

The knowledge database preferably comprises information about similar cases, which are used by the assistance system to interpret the intentions provided by the actor, in particular the intentions provided in a free text format.

The process of phrasing goals and/or implementations as well as building the intention model is a creative problem-oriented process. This can be supported by the knowledge database, which allows the assistance system to provide further assistance through proposals from similar problem cases. Thus, the actor is provided with predefined intention proposals that support the actor in providing his intentions. Furthermore, the assistance system is aware of the meaning of the intention proposals, thus when the actor choses a predefined intention proposal, no inference is needed.

In other words, the actor provides the semi-formal phrases that contain intentions. The intentions are either directly usable for the assistance system or need to be inferred from the semi-formal phrases by the reasoning engine.

In a preferred embodiment, each abstraction layer is associated with a discipline of the actor modelling the intention model.

Preferably, the discipline of the actor comprises process engineering or automation engineering.

Preferably, the actor providing the initial intentions based on which the intention model is determined is a process engineer. The intention model is then graphically modelled by various disciplines.

Thus, the intention model is used as a discipline-independent model for all disciplines across various phases of engineering a process plant.

In a preferred embodiment, the intention model comprises an actor boundary, which comprises the intentions of the actor, wherein the intention model inside of the actor boundary comprises the goals and/or the implementations that are modelled by the actor, and wherein the actor models the intention model outside of the actor boundary, wherein the intention model outside of the actor boundary comprises the requirements, wherein the requirements define requirements for the intention model modelled by another actor.

Preferably, the intention model inside the actor boundary describes actions, possible solutions and/or decision of the actor. In other words, the actor boundary describes which intentions the actor has, in particular which tasks he defines and which resources he uses.

Thus, the actor formalizes requirements outside of the actor boundary as a requirement for the next actor that works with the intention model.

In a preferred embodiment, the controlled natural language comprises fixed text blocks, predefined key words, predefined logical operators and/or free text fields with natural language.

In a preferred embodiment, the method comprises transforming the semi-formal phrase using a goal-oriented requirements language, GRL, wherein the GRL uses a subset of the i* goal modelling framework.

Some possible transformation rules from the phrases to the GRL can be found in table 1:

**Table 1**

| **Phrase** | | **GRL** |
|---|---|---|
| goal intention | → | hard goal |
| implementation intention | → | task |
| resources in implementation intentions | → | resource |
| requirements | → | elements outside of actor boundary |
| compositions in text | → | link compositions in model |

In a preferred embodiment, providing, by the assistance system, possible design solutions for the process plant, fulfilling the intentions.

In other words, the design solutions correspond to specific implementations. For example the implementation "distillation" corresponds to a design solution "distillation technology xy".

The design solutions are provided considering parts of the intention model, for example specific products, possible implementations, conflicts between goals etc.

Preferably, for each goal a plurality of design solutions is provided by the assistance system. Further preferably, each design solution is associated with a satisfaction level, in particular from the GRL. The actor then can decide, which design solution meets the requirements and which one is finally selected. This shows the subsequent actors which solutions were chosen and why they were chosen. Preferably, there is a justification for using one ore another design solution. Thus, the satisfaction level is preferably linked to dependencies to provide as much information as possible. Preferably, the satisfaction levels are automatically determined by the assistance system using the intention model.

In other words, the possible design solutions are represented in the intentional model.

In a preferred embodiment, the method comprises performing, by the assistance system, a consistency check.

Preferably, the assistance system performs the consistency check using an intention meta-model for checking and verifying the modelling and mapping rules applied to the intention model.

In other words, the intention meta-model includes modeling rules for modeling a specific intention model. The intention model is always a specific model of a specific use case, while the underlying meta model is always generic and describes modeling rules, which are universal for all intention models created.

Preferably, the assistance system performs a consistency check after one of the following situations happen. A change in decision for a design solution. Adding or removing a new element, for example a dependency or a constraint, to the intention model. Conflicts in view of goals and implementations.

Changes in one abstraction layer may lead to changes in both previous and subsequent abstraction layers.

For example, when an actor revises his decision, the elements in his own boundary change. This can result in new requirements outside the actor boundary. For the new decision an algorithm needs to find all elements, on every abstraction layer that needs to be revised by other actors. The algorithm specifically shows which goals inside the intention model can or can't be reached after the new decision. Furthermore, if the intention model is linked to engineering artefacts, such as flow diagrams, then it can show which parts of the artefact need a revision.

Preferably, engineering artefacts are means of description, methods or tools, which are used in the engineering process. The engineering artefacts further comprise process flow diagrams and/ or P&IDs.

If new elements are added, it must be checked whether the previous solutions of the other actors are still satisfied. Similar to the step before, an algorithm has to verify which goals are still achievable and which are no longer.

If changes are implemented, it is not only necessary to check individually whether the goals can still be achieved, but also to check whether new conflicts between the goals arise.

A change of elements in the intention model, either by directly changing them or through connections to other engineering artefacts, potentially adds new features, dependencies etc. The goals, that cannot be achieved after the changes are made, should not only be highlighted, but it should also be shown where exactly the conflict between the goal and the change arises. This can provide information on how to resolve the conflict.

This can be done by an additional algorithm checking all attributes of the goals and their connections as well as the influence of the change on them. Consequently, the assistance system provides indications of possible inconsistencies and their source, in particular in the graphical representation of the intention model, to the actor.

Preferably, the consistency check is performed when all actors have worked on the intention model and the intention model is considered final.

In a preferred embodiment, the method comprises designing at least part of the process plant using the intention model.

Thus, the intention model can serve as a basis for the design specification of process plants. For example, it can differentiate between three different specifications. Requirements specification, which lists all requirements outside the actor boundary. Abstract design specification, which lists all the elements inside the actor boundary of the subsequent layer, which are necessary to fulfill the requirements from the previous layer. Detail design specification, which contains the developed engineering artifacts, such as the domain-independent formalized process description or domain-specific flow charts.

A transition from requirements specification to abstract design specification works as described above.

A transition from an abstract design specification to a detail design specification requires additional steps. For a (semi-)automatic transition from the intention model to detailed engineering artifacts, a mapping of the underlying information models is required. In the case of the domain-independent formalized process description, an exemplary mapping could look like table 2:

**Table 2**

| | | |
|---|---|---|
| goal | → | process |
| task | → | process operator |
| resources | → | technical resource, |
| | | information, |
| | | energy, |
| | | product |
| softgoal | → | textual specifications |
| link composition "and" | → | parallel branches in the diagram |
| link composition "or" | → | alternative branches in the diagram |
| decomposition | → | system boundaries at different abstraction layers |

From the formalized process description, several domain-specific engineering artifacts, such as the block flow diagram, BFD, can be derived.

In a preferred embodiment, the method comprises providing, by the assistance system, a product, process and resource, PPR, model providing a PPR view to the actor using the intention model.

The PPR model is part of the intention model, and therefore also of the intention meta model. It only provides modeling rules in a way, that the implementations can be modelled using the PPR concept, for example if the implementation "water" should be modelled as an additive, it can be specified that "water" is a "product" according to the PPR model. By using the PPR model further knowledge is integrated into the intention model.

The "resource" element from the intention model is split into three different resource elements: First, product, which describes inputs and (desired) outputs. Second, process, which describes a process step, which transforms inputs to outputs. Third, resource, describes a resource, which performs the process step.

A process element is introduced as a resource into the intention model. This resource can be expanded and detailed into a process description, where the elements, such as inputs or outputs, are connected to other elements in the intention model. For this purpose, the formalized process description is used as a description language.

According to an aspect of the invention, an assistance system for formulation and modelling of intentions in process plant engineering is configured to carrying out the method, as described herein.

Preferably, a computer program comprises instructions which, when the program is executed by a computer, cause the computer to carry out the method, as described herein.

### BRIEF DESCRIPTION OF THE DRAWINGS

The subject matter of the invention will be explained in more detail in the following text with reference to preferred exemplary embodiments, which are illustrated in the attached drawings, in which:
- Fig.1: shows a schematic illustration of a system for formulation and modelling of intentions in process plant engineering;
- Fig.2: shows a schematic illustration of an intention model; and
- Fig.3: shows a schematic illustration of a method for formulation and modelling of intentions in process plant engineering.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

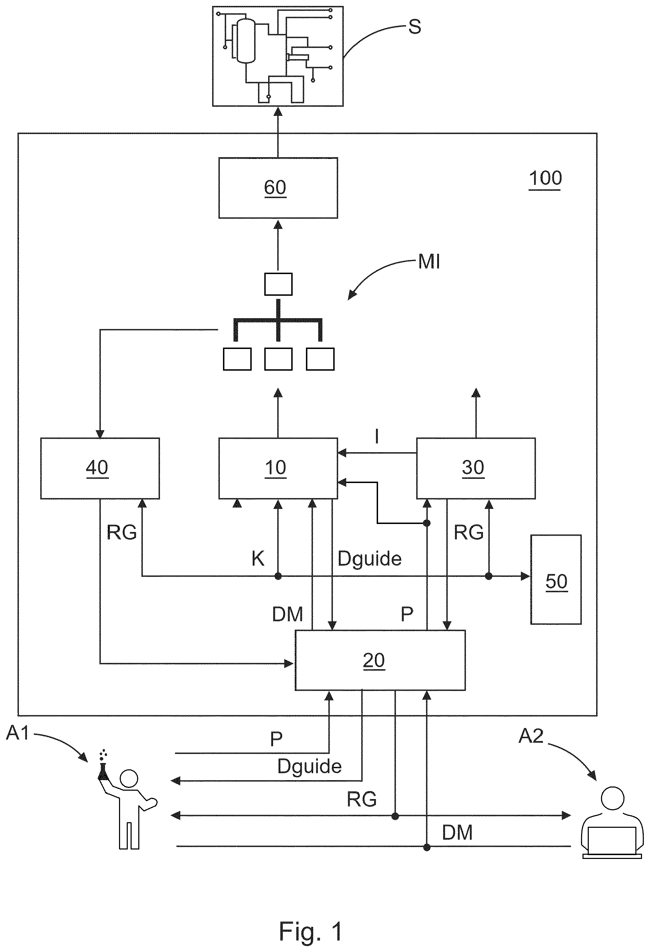

Fig. 1 describes an assistance system 100 for formulation and modelling of intentions in process plant engineering. The assistance system 100 comprises a model unit 10, an input interface 20, a reasoning engine 30, graphics unit 40, a knowledge database 50 and a design unit 60.

The knowledge database 50 contains knowledge of previous formulations of the semi-formal phrases in an ontology. So, if the actor wants to formulate something, the knowledge database provides previous knowledge, for example often used formulations, goals etc. Furthermore, it stores the current knowledge generated. The knowledge database 50 further contains knowledge of previous intention models MI. So, if the actor wants to model the relations between elements, the knowledge database 50 can contain exemplary dependencies.

The model unit 10 is configured to provide guidance data Dguide to a first actor A1. The first actor A1 is a process engineer. The guidance data Dguide contain information for the first actor A1 that should help the first actor A1 in providing necessary information to the assistance system 100 in order to generate an appropriate intention model MI. The guidance data Dguide for example contain predetermined semi-formal phrases, in particular a cloze or a gap text. The guidance data Dguide is provided by the model unit 10 via the input interface 20. The input interface 20 comprises visual unit, in particular a display that displays the guidance data Dguide to the first actor A1. The input interface 20 is configured to receive semi-formal phrases P from the first actor A1. The semi-formal phrases P for example comprise the provided clozes that have been filled with information of the first actor A1 relating to the intention, the first actor A1 wants to enter in the assistance system 100. Alternatively, the first actor A1 enters his intention in free text format. In other words, the first actor A1 enters information for process plant engineering, in particular his intentions for the engineering of the process plant. In other words, the intention of the first actor A1 relates to what and why has to be performed by the process plant to achieve a certain goal of the process plant. The guidance data Dguide are structured in a way that the first actor A1 enters different types of intention into the assistance system 100. The intention I should comprise goals IG, implementation II and requirement IR. Thus, the guidance data Dguide for example comprises a sentence like "I intend to achieve ____", wherein the first actor A1 is requested to fill in, which goal a process of the process plant should achieve. This input is interpreted by the assistance system 100 as goal IG. Furthermore, the guidance data Dguide comprise a sentence like "I intent to perform goal-directed behaviour when I encounter situation ____", wherein the first actor A1 is requested to fill in, which implementation to achieve the goal is chosen. This input is interpreted by the assistance system 100 as implementation II. The guidance data Dguide for example comprises a sentence like "In order to perform goal-directed behaviour __, the task needs __ and ____", wherein in the first action A1 is requested to fill in, which requirements are set for the implementation. This input is interpreted by the assistance system 100 as requirement IR. The first actor A1 preferably uses a personal computer that has access to the assistance system 100. Consequently, the first actor A1 gets the guidance data Dguide displayed by the periphery of the personal computer and uses the periphery of the personal computer to enter the phrases P into the assistance system 100.

The phrases P are received by the input interface 20 and provided to the reasoning engine 30. The reasoning engine 30 is configured to infer further intentions I of the first actor A1 from the provided phrases P. This is in particular achieved by accessing the knowledge database 50. The knowledge database 50 comprises knowledge K about previous intentions and in particular previous inputs of an actor. Thus, the reasoning engine 30 maps the phrases P of the first actor A1 to intentions I. The intentions I are then provided to the model unit 10.

If the phrases P of the first actor A1 directly refer to the guidance data Dguide, the phrases P directly contain intentions I so that the model unit 10 directly extracts the intentions I from the phrases P. In other words, the first actor A1 provides the phrases P that contain intentions I and/or so called hidden intentions, or in other words further knowledge, that are provided to the reasoning engine 30 to infer the phrases for the further knowledge in form of intentions I.

The semi-formal phrases P are entered by the actor A1, A2. Because of the underlying ontology describing the concepts of a phrase, the semi-formal phrases have an ontology-based description. The reasoning engine 30 can be started anytime and automatically infers all the hidden knowledge. The actor only needs to activate the reasoning engine.

The model unit 10 is configured to translate the provided intentions I into an intention model MI. The model unit 10 in this case also has access to the knowledge database 50 and uses the knowledge K of the knowledge data base 50 to translate the provided intentions I into an intention model MI. The intention model MI comprises a hierarchical structure reflecting the goal IG, implementation II and requirement IR as well as their dependencies and relationships to each other.

The intention model MI is then provided to the graphics unit 40, which is configured to transform the intention model MI into graphical representation RG of the intention model MI. The graphics unit 40 has access to the knowledge database 50 and uses the knowledge K of the knowledge database 50 to transform the intention model MI into the graphical representation RG. The graphical representation RG is then provided to the first actor A1. The graphical representation RG allows the first actor A1 to directly model the intention model MI. In other words, the first actor A1 provides modelling data DM to the input interface 20 using the graphical representation RG. For example, the first actor A1 adjusts a relationship between different implementation intentions II in the graphical representation RG. The change in the graphical representation RG is reflected by the modelling data DM. The modelling data DM is then provided to the modelling unit 10 adjusting the intention model MI accordingly. The graphical representation RG is not only accessible by the first actor A1, but also by further actors. For example, a second actor A2 is provided with the graphical representation RG. The second actor A2 in this case is an automation engineer and thus from a different discipline as the first actor A1. The graphical representation RG allows the second actor A2 and the first actor A1 to model the intention model MI. This allows actors from different disciplines to input their intentions for the process plant engineering.

The decisions for specific implementations to reach a goal are made by the actor itself. The intention model MI can show possible conflicts between the elements, so that, one can see, if an implementation II satisfies the goal IG. In the end, the actor should decide to choose the implementation II, which satisfies his goals IG the most. This decision is then documented, for example by highlighting the implementation II, which is chosen. The next actor from another discipline can now see, which implementation II has been chosen and also see why certain other implementations II have not been chosen.

When the intention model MI has been modelled by the first actor A1 and the second actor A2, the intention model MI, which is then referred to as final intention model, is provided to the design unit 60. The design unit 60 is configured to provide a design specification S for the process plant based on the intention model MI.

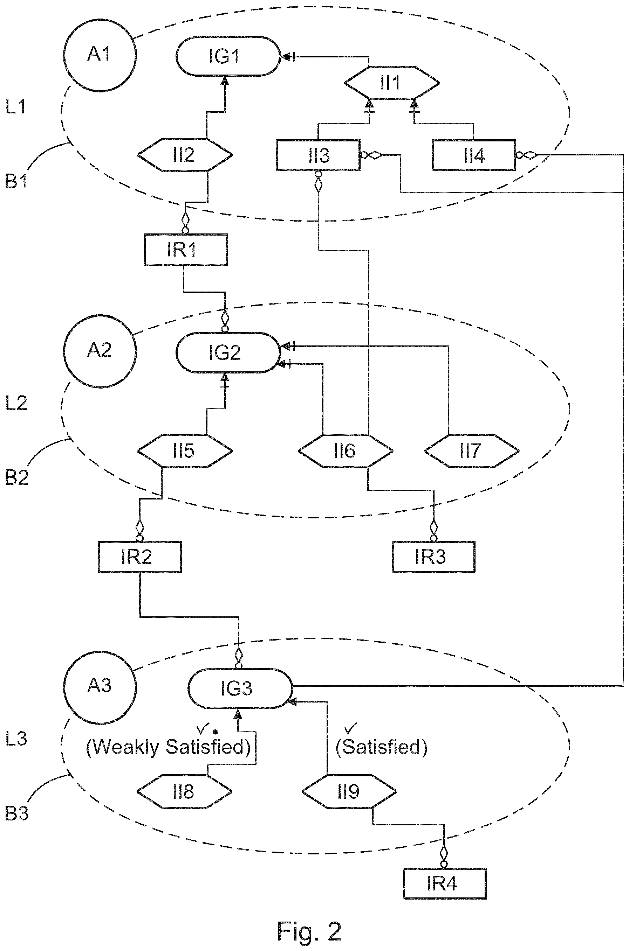

Fig. 2 shows a schematic illustration of an intention model MI. The intention model MI comprises a plurality of abstraction layers. In this case, the intention model MI comprises a first abstraction layer L1, modelled by a first actor A1, a second abstraction layer L2, modelled by a second actor A2, and a third abstraction layer L3, modelled by a third actor A3. In this case, the first actor A1 is a process engineer and the second actor A2 and the third actor A3 are automation engineers.

In the first abstraction layer L1, the first actor A1 has modelled a first goal IG1 with a first implementation 111, a second implementation II2, a third implementation II3 and a fourth implementation II4 in a first actor boundary B1. The first actor boundary B1 contains all intentions of the first actor A1 relating to the tasks he defines and which resources he uses. The first actor boundary B1 contains the actions, possible solutions and decisions of the first actor A1. The first abstraction layer L1 also comprises a first requirement IR1 that is formalized by the first actor A1 as a requirement for the next actor, in this case the second actor A2.

The intention model IM of fig. 2 is illustrated in a goal-oriented requirements language, GRL, which uses a subset of the i* goal modeling framework.

For example, the first goal IG1 defines a manufacturing of an end product. The second implementation II2 in this case defines the usage of a specific production process. The first implementation II1 in this case defines the usage of a specific input material and a specific additive. The third implementation II3 further defines the specific input material and the fourth implementation II4 further specifies the specific additive. Outside of the first actor boundary B1, the first abstraction layer L1 comprises a first requirement IR1. The first requirement IR1 defines the specific process that is necessary to be used for the second implementation II2.

Thus, the first requirement IR1 defines a requirement for the second abstraction layer L2 that is modelled by the second actor A2. The second abstraction layer L2 comprises a second goal IG2, a fifth implementation II5, a sixth implementation II6 and a seventh implementation II7 in a second actor boundary B2. The second abstraction layer L2 furthermore comprises a second requirement IR2 and a third requirement IR3 outside of the second actor boundary B2 that is formalized by the second actor A2 as a requirement for the next actor, in this case the third actor A3. The second actor boundary B2 contains all intentions of the second actor A2 relating to the tasks he defines and which resources he uses. The second actor boundary B2 contains the actions, possible solutions and decisions of the second actor A2.

The second goal IG2 defines a specific design process, which is the required process of the first requirement IR1 of the first abstraction layer L1. The fifth implementation II5 defines a usage of a specific reaction as main process. The sixth implementation II6 defines a usage of a specific dissolving method as an auxiliary process. The seventh implementation II7 defines a usage of a specific operation. The second requirement IR2 defines the requirement of the specific reaction that is needed for the fifth implementation II5. The third requirement intention IR3 defines the requirement of the specific dissolving method of the sixth implementation intention II6.

Thus, the second requirement IR2 and the third requirement IR3 define a requirement for the third abstraction layer L3. The third abstraction layer L3 comprises a third goal IG3, an eighth implementation II8 and a ninth implementation II 9 in a third actor boundary B3. The third abstraction layer L3 furthermore comprises a fourth requirement IR4 outside of the third actor boundary B3 that is formalized by the third actor A3 as a requirement for the next actor. The third actor boundary B3 contains all intentions of the third actor A3 relating to the tasks he defines and which resources he uses. The third actor boundary B3 contains the actions, possible solutions and decisions of the third actor A3.

The third goal IG3 defines a specific reaction, which is the required reaction of the second requirement IR2 of the second abstraction layer L2. The eighth implementation II8 defines a first process that can be used to achieve the specific reaction of the third goal IG3. The ninth implementation II9 defines a second process that can be used to achieve the specific reaction of the third goal IG3. The third actor A3 has further extended the information model MI by his assessment of the usage of the first process or the second process to achieve the reaction of the third goal IG3. The third actor A3 specifies the intention model MI by the information that the usage of the first process satisfies the second requirement IR2 and that the usage of the second process also satisfies the second requirement intention IR2, but the usage of the first process only weakly satisfies the second requirement IR2. Thus, the third actor A3 decides that the second process should be used. Thus, the third actor A3 defines the fourth requirement IR4 of the second process that has to be provided by another abstraction layer of the intention model MI. The first actor A1 and the second actor A2 thus are informed by reading the intention model MI that and why the second process is chosen to fulfil the second requirement IR2.

The intention model MI connects through all of the abstraction layers L1, L2, L3 and represents one continuous model for all actors A1, A2, A3.

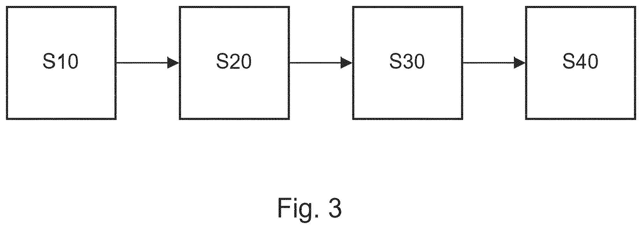

Fig.3 shows a schematic illustration of a method for formulation and modelling of intentions in process plant engineering.

In a first step S10 an assistance system 100 formulates intentions of an actor by guiding the actor A1 to provide the intentions Ito the assistance system 100 in a controlled natural language using semi-formal phrases P, wherein the intentions I are hierarchically structured and comprises at least a goal IG, describing a goal to be achieved, at least an implementation II, describing how the goal can be achieved, and at least an requirement IR, describing requirements for the at least one implementation II. In a second step S20, the assistance system 100 translates the intentions I into an intention model MI wherein the intention model MI describes a relationship between the intentions I. In a third step S30, the assistance system 100 transforms the intention model MI into a graphical representation RG of the intention model MI and providing the graphical representation RG to the actor A1, A2. In a fourth step S40, the assistance system 100 models the intention model MI using modelling data DM provided by the actor A1, A2, wherein the graphical representation RG allows the actor A1, A2 to provide the modelling data DM to the assistance system 100.

## Claims

1. A method for formulation and modelling of intentions in process plant engineering, comprising the steps:
formulating (S10), by an assistance system (100), intentions of an actor (A1, A2) by guiding the actor (A1, A2) to provide the intentions (I) to the assistance system (100) in a controlled natural language using semi-formal phrases (P), wherein the intentions (I) are hierarchically structured and comprises at least a goal (IG), describing a goal to be achieved, at least an implementation (II), describing how the goal can be achieved, and at least an requirement (IR), describing requirements for the at least one implementation (II);
translating (S20), by the assistance system (100), the intentions (I) into an intention model (MI), wherein the intention model (MI) describes a relationship between the intentions (I);
transforming (S30), by the assistance system (100), the intention model (MI) into a graphical representation (RG) of the intention model (MI) and providing the graphical representation (RG) to the actor (A1, A2);
modeling (S40), by the assistance system (100), the intention model (MI) using modelling data (DM) provided by the actor (A1, A2), wherein the graphical representation (RG) allows the actor (A1, A2) to provide the modelling data (DM) to the assistance system (100).

2. The method of claim 1,
wherein modelling the intention model (MI) comprises:
adjusting and/or extending the intentions (I) of the intention model (MI).

3. The method of any of the preceding claims,
wherein the actor (A1, A2) is guided to provide the intention (I) that
each implementation (II) is assigned to at least one goal (IG); and that
each requirement (IR)is assigned to at least one implementation intention (II).

4. The method of any of the preceding claims,
wherein the intention model (MI) comprises a plurality of abstraction layers (L1, L2, L3), wherein the intentions (I) are assigned to the abstraction layers (L1, L2, L3); wherein at least one goal (IG) is assigned to each abstraction layer (L1, L2, L3).

5. The method of any of the preceding claims,
wherein the intention model (MI) applies an ontology-based representation of concepts and their relations of the the semi-formal phrases (P).

6. The method of any of the preceding claims,
formulating the intentions (I) comprises:
inferring, by a reasoning engine (30) of the assistance system (100), the semi-formal phrases (P) using a knowledge database (50) of the assistance system (100).

7. The method of any of the preceding claims,
wherein each abstraction layer (L1, L2, L3) is associated with a discipline of the actor (A1, A2, A3) modelling the intention model (MI).

8. The method of any of the preceding claims,
wherein the intention model (MI) comprises an actor boundary (B1, B2, B3), which comprises the intentions (I) of the actor (A1);
wherein the intention model (M1) inside of the actor boundary (B1, B2, B3) comprises the goal (IG) and the implementation (II) that are modelled by the actor (A1), and wherein the actor (A1) models the intention model (MI) outside of the actor boundary (B1, B2, B3), wherein the intention model (MI) outside of the actor boundary (B1, B2, B3) comprises the requirements (IR);
wherein the requirements (IR) define requirements for the intention model (MI) modelled by another actor (A2).

9. The method of any of the preceding claims,
wherein the controlled natural language comprises fixed text blocks, predefined key words, predefined logical operators and/or free text fields with natural language.

10. The method of any of the preceding claims, comprising the step:
transforming the semi-formal phrase (P) using a goal-oriented requirements language, GRL, wherein the GRL uses a subset of the i* goal modelling framework.

11. The method of any of the preceding claims, comprising the step:
providing, by the assistance system (100), possible design solutions (S) for the process plant, fulfilling the intentions (I).

12. The method of any of the preceding claims, comprising the step:
performing, by the assistance system (100), a consistency check of the intention model (MI).

13. The method of any of the preceding claims, comprising the step:
designing at least part of the process plant using the intention model (MI) and the provided design solutions.

14. The method of any of the preceding claims, comprising the step:
providing, by the assistance system (100), a product, process and resource, PPR, model extension of the intention model providing a PPR view to the actor (A1, A2, A3) using the intention model (MI).

15. An assistance system for formulation and modelling of intentions in process plant engineering, being configured to carrying out the method of any of the claims 1-14.
